# EUROPEAN PATENT APPLICATION

(11) **EP 3 932 192 A1**
(43) Date of publication of application: **05.01.2022**
(21) Application number: 21181656.6
(22) Date of filing: 25.06.2021
(51) Int. Cl.: A01K 1/015, A01K 1/01

(54) **ANIMAL SHED FLOOR ASSEMBLY**

(30) Priority: 01.07.2020 NL 2025967
(71) Applicant: Lely Patent N.V., 3147 PB Maassluis (NL)
(72) Inventor: HUYZER, Arie, 3147 PB Maassluis (NL); BLOKLAND, Korstiaan Cornelis, 3147 PB Maassluis (NL); VAN DEN BERG, Karel, 3147 PB Maassluis (NL)
(74) Representative: Octrooibureau Van der Lely N.V.

(57) **Abstract**

The invention relates to an animal shed floor assembly comprising a slatted floor above an underlying manure reservoir, and having a plurality of slotted openings that open into the underlying manure reservoir; and a floor mat having a first mat surface and an opposite second mat surface spaced apart, wherein the first mat surface is a walking surface for animals and the second mat surface faces the first floor surface, wherein the floor mat further comprises multiple through holes extending from the first to the second mat surface, and opening towards the slatted floor, wherein the through holes are relatively narrow compared to the slotted openings of the slatted floor, such that urine is allowed to flow through the through hole towards the slatted floor and feces remains on the first mat surface when the animal shed floor is in use

## Description

### BACKGROUND OF THE INVENTION

### Field of the invention

The invention relates to an animal shed floor assembly configured for separating urine and feces. The invention also relates to an animal shed comprising such a floor assembly. Furthermore, the invention relates to an animal shed system comprising such a floor assembly.

### Description of the related art

Traditionally, cattle is kept in an animal space on a slatted floor with slot openings that open out into an underlying manure cellar. Characteristic of such floors is that the width of the slot opening remains the same in the downward direction or increases along its depth. Feces and urine fall through the slot openings and end up in the manure cellar that serves as storage for the mixture of urine and feces, the so-called slurry. In this slurry, all fertilizer components such as phosphates, fibers, nitrogen are present. The reaction of urine with feces produces ammonia that exits through the slot openings into the shed and eventually to the environment where it has a harmful effect.

Due to regulations and environmental protection, it is desirable to fertilize with individual fertilizer components. To separate slurry into individual manure components is tricky and expensive.

It is known that a perforated stable floor will let urine through to an underlying space. Air with ammonia above the urine is filtered off and passed through an air washer. The aim is to evaporate and remove all ammonia from the urine in this way. Feces stays on top of the floor. A perforated floor has the disadvantage that the holes will be blocked by dirt and the like quite easy.

Patent publication NL2018338 discloses a slatted floor with a walking surface and at least one slotted opening that opens up to a manure cellar, and wherein in the slotted opening a slot element is inserted to decrease the opening of the slot. The element comprises a profile that fits into the slotted opening, and a hole that allows urine to pass through. However, slatted floors do not have standardized slot sizes, such that for each individual floor a tailored element must be made. In addition, the number of slot openings to be provided with such an element is very large due to the size of a stable floor, such that this is very tiresome and heavy work. Furthermore, the profiles impair the walkability of the slatted floor because the grip of the floor decreases.

It would therefore be desirable to provide a stable floor that alleviates at least some of the perceived inconveniences of the prior art.

### BRIEF SUMMARY OF THE INVENTION

According to the invention, there is provided an animal shed floor comprising an assembly of:
- a slatted floor having a first floor surface and an opposite second floor surface, wherein the second floor surface faces an underlying manure reservoir, and having a plurality of slotted openings that open out into the underlying manure reservoir; and
- a floor mat having a first mat surface and an opposite second mat surface, wherein the first mat surface is a walking surface for animals and the second mat surface faces the first floor surface,
wherein the floor mat further comprises multiple through holes extending from the first to the second mat surface, and opening towards the slatted floor, wherein the through holes are relatively narrow compared to the slotted openings of the slatted floor, such that urine is allowed to flow through the through hole towards the slatted floor and feces remains on the first mat surface when the animal shed floor is in use.

The animal shed floor is an assembly of the slatted floor and the floor mat. The floor mat may be removable from the slatted floor, for instance for maintenance and/or replacement. The floor mat may cover the slatted floor at least partially, for instance only in a walking corridor where the animals roam. The animals may be dairy animals, in particular cows or goats.

The slatted floor may be made up of at least one floor element, for example, one or multiple floor elements. Underneath the animal shed floor, a reservoir for storing manure, urine and/or a mixture thereof called slurry, such as a manure cellar, is provided. The slotted openings of the slatted floor open into the reservoir when the animal shed floor is in use. The floor mat has multiple through holes, forming perforations, such that a perforated floor mat is achieved. The perforations or through holes have dimensions that allow urine to flow through the floor mat to the underlying reservoir via the slotted openings of the slatted floor, when the animal shed floor is in use, i.e. when animals are kept in an animal shed having such an animal shed floor. The first and second mat surfaces are spaced apart, thus having a thickness different from zero.

Because the through holes are relatively narrow at the opening at the first mat surface, there is only a narrow connection of the animal shed with the underlying reservoir or manure cellar. Vapors such as ammonia thus remain largely in the reservoir. In addition, the through holes are so narrow at the first mat surface that feces cannot easily pass to the reservoir. The larger part of the feces will remain on the walking surface, and can be removed separately from the urine. Removal of the feces can take place by, for example, a manure suction robot or manure slide.

Furthermore, the through holes, forming the perforations, can form a flow regulator to control an airflow from the shed to the reservoir, such that any ammonia formed on the floor of the shed is sucked into the reservoir, thereby reducing the concentration of ammonia in the shed and therefore reducing the odor in the shed.

Each through hole opens out towards the second mat surface. It is referred that the opening of the through hole at the second mat surface is wider than then the opening of the through hole at the first surface.

Preferably, the multiple through holes are arranged in a pattern across the floor mat with respect to the slotted openings in the slatted floor. For instance in a random pattern with respect to the slotted openings of the slatted floor, i.e. a pattern where only a portion of the through holes accidentally coincides with the slotted openings. Alternatively, the through holes are arranged in a regular pattern, such that all, or a part of the through holes are aligned with the slotted openings. The pattern may be random, linear, circular, square, a grid, or any other pattern.

It is preferred that the number of through holes in the floor is between 20 to 50 through holes per square meter, more preferably between 20 to 35 through holes per square meter, in particular about 20 to 30 through holes per square meter. The amount of through holes may also be calculated in square millimeter passage area for urine and air per square meter floor mat area. For instance, the amount of through holes should amount to 1000 to 2000 square millimeter per square meter floor mat, preferably between 1300 and 1700 square millimeter per square meter floor mat, more preferably about 1500 to 1600 square millimeter per square meter floor mat. The number of through holes, either in absolute numbers per square meter floor mat or corresponding to the passage area per square meter floor mat, would be sufficient to sustain the pressure difference between the shed above the floor and the reservoir below the floor.

Preferably, the floor mat is made of a resilient material, in particular an elastomer, such as a rubber or a thermoplastic elastomer. The advantage of a resilient material is that the floor mat can be compressed under the weight of the animals walking on the floor mat, and subsequently released. This movement of the floor mat may assist in keeping the through holes open, as any soil, feces or any other solid filth, can be removed with this compressing and releasing. The floor mat may have a relatively small thickness compared to the shed floor. As such, a liquid flow or jet directed at the floor mat may assist in a removal of any soil, feces or other solid filth from the through holes. The liquid may include any excreted urine from a cow. Furthermore, it is preferred that the floor comprises concrete, or is made of concrete, and is preferably made of reinforced concrete. Concrete is used in most shed floors, but alternative and suitable materials may be used.

The through hole may have a columnar shape, i.e. a continuous width along the thickness of the floor mat, wherein the cross section may have a circular shape, or a rectangular shape or a polygonal shape. According to an embodiment, the through opening has a first cross section in a plane parallel to the first and/or second mat surface, a second cross section perpendicular to the first and/or second mat surface, and an interior surface, wherein the first cross section is relatively small at the first mat surface and relatively wide at the second mat surface, such that the opening of the through hole at the second mat surface is wider than then the opening of the through hole at the first surface. The through hole, may be shaped such that it widens towards the second mat surface, i.e. relatively narrow at or near the first mat surface and relatively wide at the second mat surface. For instance, the through hole is shaped as a frustum, in particular a right frustum, extending from the first mat surface to the second mat surface.

Preferably, the through hole is oriented perpendicularly to the first mat surface and/or second mat surface, i.e. the axis of the through hole is perpendicular with the first mat surface and/or second mat surface. Alternatively, the through hole may be oriented in a slanted fashion with respect to the first and second mat surface, i.e. the axis of the through hole is at an angle different form 90 degrees with the first mat surface and/or second mat surface.

According to a further embodiment, the interior surface has a step at a distance different from zero from the first and second mat surface, thus dividing the through hole into a first partition extending from the first mat surface to the step, and a second partition extending from the step to the second mat surface, wherein the first cross section of the first partition at the first mat surface is relatively narrow compared to the first cross section of the second partition at the second mat surface,

The step may be defined as a sudden change in inner dimensions of the through hole, e.g. a sudden narrowing or widening of the through hole. The step may form a peripheral protrusion extending from the interior surface, preferably an axially symmetrical protrusion, at a distance different from zero from the first mat surface and second mat surface. The step in the through hole divides the through hole in a first and a second partition that may have different dimensions and/or shapes. The step may be located halfway of the thickness of the floor mat, such that the first and second partition stretch over a similar height. Preferably, the first partition has a lower height than the second partition, i.e. the step is located closer to the first mat surface than to the second mat surface.

According to an embodiment, the second partition is shaped such that it widens towards the second mat surface, i.e. relatively narrow at or near the step and relatively wide at the second mat surface. Furthermore, the second partition can be shaped as a frustum, in particular a right frustum, or as a dome, i.e. an upper section of a hollow sphere, or as a cylinder, in particular a right cylinder, where the second partition extends from the step to the second mat surface. The first partition may be shaped as an upright cylinder, or as a rectangle, specifically a cube, extending from the first mat surface to the step.

A frustum is the portion of a 3D-shape (normally a cone or pyramid) that lies between one or two parallel planes cutting the 3D-shape (also known as a solid geometry or solid). A right frustum is a parallel truncation of a right pyramid or right cone. A pyramid is a polyhedron formed by connecting a polygonal base and a point, called the apex. Each base edge and apex form a triangle, called a lateral face. It is a conic solid with polygonal base. A right pyramid has its apex directly above the centroid of its base. A cone is a three-dimensional geometric shape (a solid geometry or solid) that tapers smoothly from a flat base (frequently, though not necessarily, circular) to a point called the apex or vertex. A right circular cone is a cone with a circular base having the axis passing through the apex and the center of the base at right angles to its plane.

Additionally, the second partition has extensions at the second mat surface that radiate from the second partition and open up to the second mat surface, for instance two extensions opposite of each other. Preferably, the number of extensions is four, thereby forming a starlike shape at the second mat surface. The extensions may be advantageous for the flow of fluids through the second partition to the reservoir.

The frustum or dome, or any shape of the through hole or second partition that widens towards the second mat surface, increases the area of the interior surface of the through hole, and thus the evaporation rate of the urine and thus the formation of ammonia, but may also help to prevent capillary action in the through hole. Furthermore, the widening shape of the through hole or second partition allows for a relatively weakening of the floor mat at the first mat surface, such that in use, the animal, by transferring its weight to the floor mat through a hoof, is able to move the floor mat towards the slatted floor, such that any dirt is pressed out of the through hole. When the hoof is lifted, the floor mat is released, which creates a sucking motion for enhancing the urine flow through the through hole. The pressing and sucking together form a pump motion through the walking of animals across the floor mat.

Furthermore, the second cross section may have a varying width, because of a changing shape of the through hole along the thickness of the floor element. As such, along the second cross section the width of the first partition may be relatively constant, whereas the width of the second partition may change from relatively narrow extending from and with respect to the first partition, thus forming the step, to relatively wide at the second surface of the floor, which may result in the frustum shape or dome shape as described above. The width of the through hole, or the second partition, may vary along the second cross section through an angled inner surface. For instance, the angle between the inner surface and the second mat surface may range from about 90 degrees to 55 degrees, i.e. from (almost) perpendicular to the second mat surface to a slanted orientation. Preferably, the angle between the inner surface and the second mat surface has a maximum of 30 degrees. When a floor mat is made of an elastomer that is molded, a suitable draft angle for releasing the floor mat from the mold must be taken into account.

Along the second cross section, the width of the through hole at the second mat surface of the floor mat may be equal to the width of the through hole at the first mat surface. Preferably, along the second cross section the through hole has a width that changes from 5 to 10 millimeter (mm) at its narrowest to 30 to 50 mm, preferably 35 to 45 mm, at its widest. The width of the second cross section at the first partition may be between 5 to 10 mm, preferably about 8 or 10 mm, over its height. The height of the first partition may be at most half of the thickness of the floor mat, which may be less than 10 mm, preferably less than 5 mm, more preferably about 2 mm.

Preferably, the opening of the through hole that opens out to the first mat surface is circular with a diameter between 5.0 and 10 mm, preferably between 7.5 and 10 mm, for instance bout 9.5 mm. It has been established experimentally that a hole or opening of such size on the one hand allows a rapid passage of urine and on the other hand is sufficiently small to prevent feces from passing.

According to an embodiment, the walking surface of the floor mat comprises a texture, wherein any dimension of the texture is relatively small compared to the first and/or second cross section of the first partition. Adding texture to the first mat surface or walking surface of the floor mat increases grip while walking on the first mat surface, even when in use. Preferably, the texture comprises a pattern of intersecting notches having a depth with respect to the first surface, and a width, wherein the depth and/or width of the notches is relatively small compared to the first and/or second cross section of the first partition. To avoid a slippery floor mat if a flat and smooth first mat surface, i.e. the walking surface, is used, the notches in the floor may provide some roughness and therefor grip on the floor mat when it is covered with feces and urine. Furthermore, the notches may enhance the drainage of the urine to the through holes and thus to the reservoir below the floor. As a result, urine from the surrounding area can flow faster through the openings to the reservoir underneath the shed floor, thus allowing fewer emissions of ammonia vapors from the surface of the shed floor. Preferably, the depth of the notch is greater than zero and less than 5 millimeter, preferably between 1 and 5 millimeter.

Alternatively or additionally, the texture may comprise a plurality of knobs on the first mat surface. The knobs may be distributed evenly between the through hole openings and over the first mat surface. The knobs may form a regular pattern on the first mat surface, such a rows or circles of knobs.

Furthermore, the floor mat comprises a plurality of indentations at the walking surface, wherein each of the through holes is located in an indentation. The indentation may be provided with one or more through holes grouped together.

Preferably, each indentation comprises a sloping sidewall that surrounds the through hole, wherein the sloping sidewall of each indentation forms a sloping portion of the first mat surface that connects a lower portion of the first mat surface formed by the indentation, and a raised portion of the first mat surface. In particular, the sloping sidewalls of neighboring indentations are adjacent, forming the raised portions of the first mat surface. The sidewalls form part of the first mat surface, and are the connecting part between the raised portions and lower portions of the first mat surface. When the first mat surface comprises a texture, as described above, the texture extends over the sloping sidewalls of the indentations as well, and may extend over the full indentation. The indentation, and in particular the sloping sidewall, enhances the flow of urine and any airflow towards the through holes. The slope of the sidewall may be up to 10% with respect to a horizontal surface, for instance the second mat surface. Preferably, the slope is at most 5%, more preferably at most 2%. Alternatively, the angle between the sidewall and the horizontal surface may be about 5 to 6 degrees, or less than 3 degrees, or less than 2 degrees.

According to an embodiment, the second mat surface comprises a plurality of protrusions that are spaced apart, and distributed between the through holes, such that a distance different from zero is created between a mouth of any through hole and the first floor surface. The protrusions allow a space between the first floor surface and the second mat surface, such that urine (or any fluid) can flow easily from the through hole to the slotted openings of the slatted floor.

The protrusion may be provided in various forms, such as that each protrusion runs continuously along the second mat surface, or each protrusion forms a stud, and the plurality of protrusions are studs spaced apart from each other and distributed between the through holes. A continuous protrusion may form an alternating pattern on the second mat surface of open channels between the continuous protrusions, which channels hold the through holes. It would be advantageous to have the channels run in a non-parallel fashion with respect to the slotted openings of the slatted floor. With protrusions shaped as studs, the through holes may be in a pattern that is random or out of alignment with respect to the slotted openings of the slatted floor.

The studs may comprise first studs and second studs. The first studs may be neighbouring to the location of the through hole at the second mat surface, and may be adjacent to the opening of the second partition at the second mat surface. Second studs may be provided at a larger distance from the though opening at the second surface than the first studs. The first studs may have a larger height than the second studs. This may be advantageous in combination with the indentations, such that the thinner part of the floor mat at the through hole does not bend too far upon loading, which would be the case with all the studs having the same height. For a cow, walking on the floor mat it may then seem like the floor mat is flat, instead provided with indentations.

The invention also concerns a floor mat for use in an animal shed floor assembly as described above, wherein the floor mat covers the slatted floor at least partially. Since the animal shed floor is used for different functions, it may be that at some parts of the slatted floor, a floor mat is not advantageous. The floor mat can be omitted there. However, it is recommended to use the assembly of the slatted floor and the floor mat at least in the corridor between the animal boxes.

The floor may be made in one piece at the location of the animal shed, and thus comprising one floor element, and rolled out as a carpet over the slatted floor. Advantageously, the floor mat may comprise at least two floor mat elements, wherein each floor mat element has side edges, and wherein at least a first side edge of a first floor mat element forms an interface with a second side edge from a second floor mat element. Building a floor mat out of more floor mat elements will allow for manufacturing the floor mat elements remotely and/or as a prefabricated floor mat that can be bought off the shelf. The floor mat elements may be placed edge to edge to form the floor mat. The edges of the adjacent or neighboring floor mat elements can form a full interface, i.e. the edges touch across the full edge area, or a partial interface, i.e. the edges tough across a part of the edge area. In the latter case, the edges of the adjacent or neighboring floor mat elements may form a gutter or groove between the floor elements.

Alternatively, the first side edge of a first floor mat element has a protrusion extending from the first side edge at the first surface, and wherein the second side edge of the second floor mat element has a notch extending into the second side edge and the first surface, wherein the protrusion and the notch have accommodating shapes, such that when the protrusion and the notch engage, the first surfaces of the two floor mat elements are flush. In order to install the floor mat elements on the slatted floor and form a shed floor, at least two opposing edges of the floor mat element may have engagement means to engage with a neighboring floor mat element. The side edges of the notch and protrusion may be spaced apart when the floor mat elements are assembled as a floor mat, i.e. the notches of each adjacent floor mat element may overlap partially.

Alternatively, each side edge of each floor mat element may have a protrusion extending from the side edges at the first mat surface, such that the protrusion of the first floor mat element and the protrusion of the second floor mat element are adjacent.
For the protrusions to be adjacent, they may be provided half way the side edge, i.e. with a similar distance to both the first mat surface and the second mat surface. The protrusions may then be adjacent at their respective end edges.

According to an embodiment, each floor mat element is shaped as a trapezoid, in particular as a parallelogram. Preferably, the floor mat element is shaped as a trapezoid or parallelogram of which at least one angle is not a right angle, i.e. at least one angle is not equal to 90 degrees. The deviation from the right angle may be less than 5 degrees. Preferably, the floor mat element is shaped as a parallelogram having two pairs of parallel sides. This deviation creates a floor mat upon assembly with oblique seams or junctures between the two or more floor mat elements. Preferably, the oblique seams are located in the direction of movement of the manure suction robot. The advantage of such oblique seams is that the direction of movement of the manure suction robot is never perpendicular to the seams, which would decrease the chance of damaging the floor mat with the wheels of the manure suction robot. Furthermore, upon assembly, it would be possible to have no more than three floor mat elements at each junction, thereby reducing the chance of lift at the corners of the floor mat elements.

The invention furthermore concerns an animal shed comprising an animal shed floor as described above or a floor mat as described above.

Moreover, the invention concerns an animal shed system comprising
- an animal shed having an animal shed floor as described above;
- a reservoir situated underneath the animal shed floor, wherein the through holes and the slotted openings allow a fluid flow from the animal shed to the reservoir; and
- an air extraction device for extracting ammonia containing air underneath the floor, out of the reservoir. The animal shed floor allows urine and air to flow from the animal shed to the reservoir via the through holes in the floor mat and the slotted openings of the slatted floor. The air extraction device, in particular a blower, reduces the air pressure, such that air is sucked out of the animal space or shed above the shed floor. This results in an additional reduction of emissions to the environment. Additionally, the airflow above the shed floor ensures rapid flow of urine through the holes.

In particular, the animal shed system comprises an air washer coupled to the air extraction device to capture ammonia present in the extracted air. The air washer or scrubber may contain an acid solution, such as sulfuric acid or nitric acid. The air above the liquid layer, which will generally mainly consist of urine, has a high ammonia content. By forcing the air from the reservoir through an air washer, known per se, the ammonia is bound in the scrubber's acid solution.

It has been found experimentally that a particularly advantageous effect is obtained if the air extraction device creates a lower pressure under the floor relative to the pressure above the floor, wherein the pressure difference is between 0.3 mbar and 1.0 mbar. The air extraction device thus creates a low vacuum under the floor, with a lower pressure than atmospheric pressure. The pressure under the floor is preferably 0.3 to 1.0 mbar lower than atmospheric pressure that is active above the floor.

The animal shed system may further comprise a manure-removal vehicle for removing manure or feces from the animal-shed floor. Since the urine flows through the animal shed floor via the through holes of the floor mat and the slotted openings of the slatted floor, the feces remain largely on the walking surface of the animal shed floor. The manure-removal vehicle may remove the feces to keep the animal shed floor clean and prevent the feces from blocking the through holes of the floor mat. The manure removal vehicle may be a wheeled manure removal vehicle, such as a manure suction robot, or a manure slide.

### BRIEF DESCRIPTION OF THE DRAWINGS

Figure 1 shows schematically an animal shed system according to the invention.
Figure 2 shows schematically an animal shed floor according to the invention.
Figures 3A and B show several other embodiments of the floor mat according to the invention.
Figures 4A and 4B show top views of a floor mat element according to the invention.
Figures 5A and 5B show the engaging of two floor mat elements according to the inventions.
Figure 6 shows a schematic bottom view of floor mat element according to the invention.
Figure 7A shows a schematic cross-section of the floor mat element of Fig. 6 along line A-A.
Figure 7B shows a schematic cross-section of the floor mat element of Fig. 6 along line B-B.

### DESCRIPTION OF ILLUSTRATIVE EMBODIMENTS

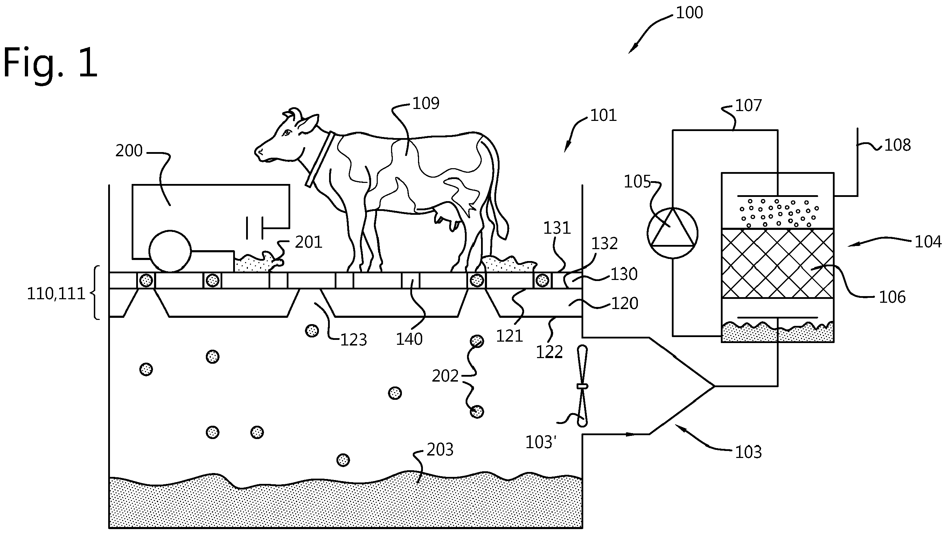

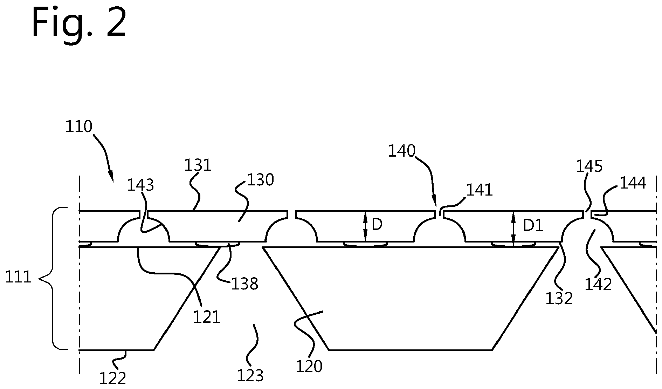

Figure 1 schematically shows an animal shed system 100 according to the invention, comprising a floor 110 for an animal space or animal shed 101, the floor 110 comprises an assembly 111 of a slatted floor 120 and a floor mat 130. The floor mat 130 has a walking surface or first mat surface 131, a second mat surface 132 and multiple through holes 140 that open up to an underneath reservoir 102, e.g. a manure cellar. The first mat surface 131 and the second mat surface 132 are spaced apart, such that the floor mat 130 or floor mat element 150 has a thickness D, see Figure 2. The floor mat 130 covers the slatted floor 120, i.e. lies on top of the slatted floor 120. The slatted floor 120 has a first floor surface 121 and a second floor surface 122, and multiple slotted openings 123 that open out to the underneath reservoir 102. The second mat surface 132 faces the first floor surface 121. In Fig. 1, the second mat surface 132 and the first floor surface 121 are adjacent. The through hole 140 has an opening 145 at the first surface 131. Urine 202 will flow through the opening 145 via the through hole 140 and the slotted openings 123 to the reservoir 102 underneath the floor 110. The opening 145 is shaped such that feces 201 cannot pass and will remain on the first mat surface 131. The through holes 140 are distributed over the floor mat 130 in a pattern such that a number of through holes 140 are aligned with the slotted openings 123, as can be seen in Fig. 1.

The system 100 further comprises an air extraction device 103, which can be a fan, in particular a blower 103', for extracting air under the assembly. The system 100 also comprises an air washer 104 coupled to the air extraction device 103 to be present in the extracted air to capture ammonia.

The blower 103' provides a low vacuum of approximately 0.7 mbar under atmospheric pressure, which is the difference between the prevailing air pressure in the animal space 101 and the lower pressure in the manure cellar 102 located under the shed floor 110. Because the holes 140 are relatively small and the free space under the shed floor 110 is relatively large, the prevailing pressure in this free space will be relatively constant seen over the entire space. In other words, the pressure gradient in the direction of the blower 103' is small.

The air washer 104 is designed as a packed bed-washing column. A pump 105 from underneath a packed bed 106 pumps acid absorbent liquid in the form of diluted sulfuric acid or diluted nitric acid to a sprayer 107 above the packed bed 106. The ammonia-rich air extracted by the blower 103' is introduced in countercurrent under the packed bed 106 and flows upwards in countercurrent with the absorbent liquid. The absorbent liquid absorbs, among other things, the ammonia and makes it soluble as ammonium. In purified form, the air is conducted via an outlet 108 to the outside environment. The packed bed 106 can be made from different types of fillers and serves to increase the contact surface of the absorbent fluid with the air to be purified. The air washer 104 can also be carried out in transverse flow, wherein the airflow is being lead through the packed bed 106 in a horizontal direction. The packed bed 106 can also be in the form of a cloth over which the absorption liquid runs and the air to be washed is passed through in transverse flow.

After some time, the amount of dissolved ammonia in the absorbent causes a pH increase, such that the absorbent should be replaced. The resulting saturated and still slightly acidic absorption liquid is a nitrogen-containing fertilizer as so-called flushing water. In order to be able to postpone replacement, in an embodiment not shown, the air washer comprises an acid dosing system to be able to keep the pH of the absorption liquid constant.

In addition to ammonia, water vapor from the manure cellar 102 may also pass through the air washer 104 and be removed. This will lead to a thickening of the liquid in the manure cellar 102. This liquid is rich in salts; in particular potassium salts, and is therefore a good potassium fertilizer.

An autonomous manure suction robot 200 runs between the animals 109 over the floor 110, i.e. the walking surface 131 of the floor mat. This robot 200 removes solid feces 201 that largely remain on the surface of the floor 110, and then dumps the feces in a separate space, not shown. In an embodiment not shown, the feces 201 are removed by a pulled manure slide. The collected feces 201 can be further processed by, for example, drying or pressing whereby manure fibers are removed from the feces 201.

Contact of feces 201 with urine 202 provides an enzymatic conversion reaction of urea in the urine 202 to ammonia. By regularly cleaning the shed floor 110, for example every hour, the feces 201 have no or at least less chance to react with the urine 202. By using a manure suction robot 200 for this purpose, the feces 201 are removed from the floor 110 on site and the feces 201 are not spread over the floor, which can easily lead to blockage of the holes 140.

Because the feces 201 are not fully mixed with the urine 202, almost all phosphate remains in the feces and the solids percentage is relatively high. Eventually, the excretion products (feces 201 and urine 202) of a farm animal in the animal space 101 are separated into three parts in a relatively simple manner: phosphate-rich solid feces with a high organic content, a potassium-rich liquid and a nitrogen-rich liquid. These parts can be used for specific fertilization processes and have a value that is higher than that of the slurry that generally results when feces 201 and urine 202 are dumped in a manure cellar together.

In order to achieve that the urine 202 and feces 201 are separated, and in addition that the blower 103' causes a low vacuum in the reservoir 102, a plurality of through holes 140 are needed in the floor 110. Spread-out feces on the floor or other dirt usually block traditional perforations in a concrete animal floor easily. Enlarging these perforations is not favorable, due to an increased risk of harm to the animals through spraining or fracturing of a leg due to missteps in a perforation. Other solutions, like filling up the slots of an existing slotted floor with profiles having smaller openings, requires tedious, tiresome and expensive work.

The floor mat 130 of the shed system 100 shown in Fig. 1 comprises at least one floor mat element 150. The floor mat 130 can thus comprise of one single floor mat element 150 (i.e. made of one piece, possibly rolled out as a carpet in the animal shed 101), or multiple floor mat elements 150 that make up the floor mat 130. The latter situation is the preferred embodiment of the floor mat 130. The floor mat element 150, and thus the floor mat 130, has multiple through holes 140 that open up to the reservoir 102 underneath the floor 110 via the slatted floor 120. The floor mat 130, and thus the floor mat element 150, has a first mat surface 131 and a second mat surface 132. The first mat surface 131 forms the walking surface of the floor mat 130, and of the floor 110 in general, i.e. the animals 109 in the shed walk across the first mat surface 131 when the floor mat 130 or floor 110 is in use. The second mat surface 132 faces the slatted floor 120. The through holes 140 extend from the first mat surface 131 to the second mat surface 132.

Figure 2 shows an animal shed floor 110 being an assembly 111 of a slatted floor 120 and a floor mat 130. The slatted floor comprises a first floor surface 121 and a second floor surface 122. Slotted openings 123 extend through the slatted floor form the first floor surface 121 to the second floor surface 122. The slatted floor 120 is covered with the floor mat 130. The floor mat 130 has a first mat surface 131 and a second mat surface 132. The through holes 140 have a first partition 141 and a second partition 142, divided by a step 144. The first partition 141 extends between the first mat surface 121 and the step 144, and the second partition 142 extends between the step 144 and the second mat surface 122. The first partition 141 coincides with the opening 145 of the through hole 140. The second partition 142 is shaped as a dome, and widens from the step 144 towards the second mat surface 132. The first partition 141 has a constant first cross section, i.e. the dimensions of the first cross section at the first partition 141 does not change when travelling along the thickness of the floor mat 130. However, the first cross section of the first partition 141 may vary along the thickness of the floor mat 130, especially when a draft angle of the floor mat element mold is needed for a molded floor element 150. The second partition 142 has a varying first cross section, i.e. the dimensions of the first cross section at the second partition 142 changes when travelling along the thickness of the floor mat 130 or floor mat element 150.

Fig. 2 further shows that at the second mat surface 132 studs 138 are provided. These studs 138 may be separate parts of the floor mat 130 or floor mat element 150, i.e. attached later on, but can also be integral parts of the floor mat 130 or floor mat element 150 upon manufacturing, e.g. molding. The studs 138 arrange for a distance T between the second mat surface 132 and the first floor surface 121, where the distance T is different from zero. The space that is thus provided allows a smooth flow of urine 202 between the floor mat and the slatted floor towards the slotted openings and thus to the manure reservoir 102. In case of integral studs 138, the floor mat has a locally increased thickness D1.

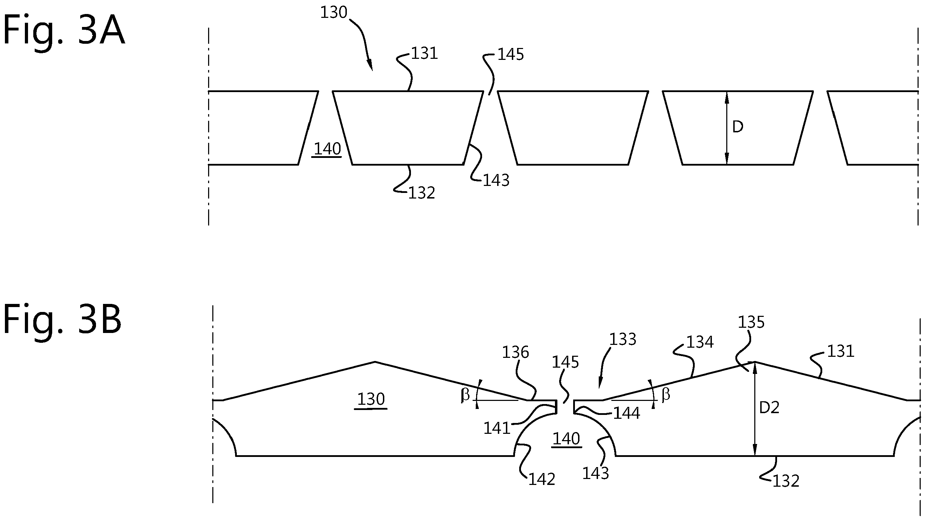

Figure 3A shows the through hole shaped as a frustum, in two dimensions reflected by a truncated A-shape (capital letter *lambda*)*,* which could mean a truncated cone or truncated pyramid shape for the second partition, or any polyhedron having a truncated A-shaped (capital letter *lambda*) cross section. The slanting surface of the frustum or dome increases the area of the inner surface 143. The embodiment of Fig. 3a thus has no step, and thus is not divided into a first and second partition. In case of a step, such as shown in Fig. 2 or Fig. 3B, the second partition 142 may be shaped as a frustum, wherein the frustum then extends between the step 144 and the second mat surface 132.

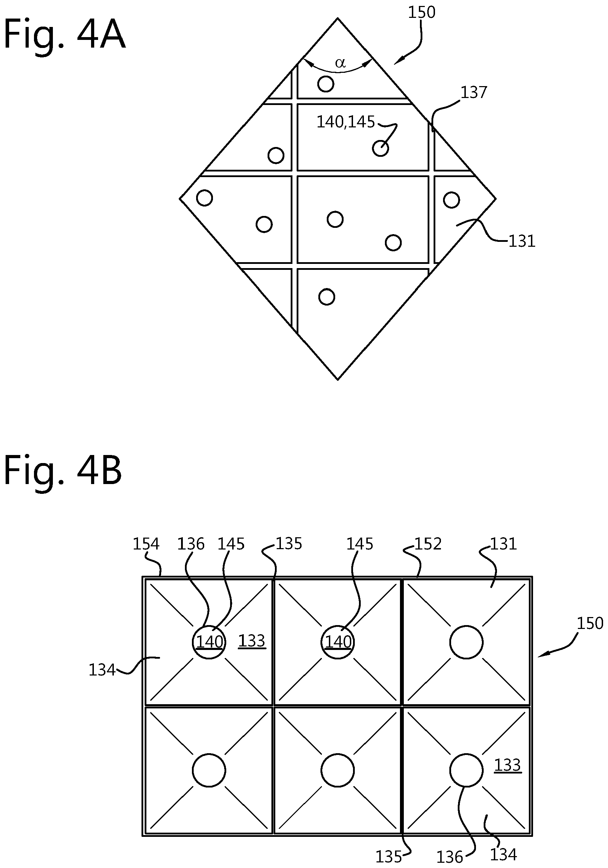

Figure 3B shows an embodiment of the floor mat 133 wherein the through hole 140 comprises a step 144, dividing the through hole 140 into a first partition 141 and a second partition 142, as shown earlier in Fig. 2. In addition, the floor mat 133 has a first mat surface or walking surface 131 with raised portions 135 and lower portions 136, see also Figure 4B. The raised portion 135 and the lower portion 136 are formed by an indentation 133 in the first mat surface 131, and are connected by a sloping sidewall 134. At the raised portions, the floor mat 130 or floor mat element 150 may have an increased thickness D2 and/or at the lower portions, the floor mat 130 or floor mat element 150 may have a decreased thickness (not shown) in comparison to the rest of the floor mat 130. The raised portions and lower portions may be in relation to each other, or in relation to a baseline first mat surface (not shown). The through hole 140 is provided in the lower portion 136. The sidewall is at an angle β (*beta*) with the lower portion of the first mat surface. The angle β (*beta*) is preferably less than 6 degrees.

Figure 4A shows a top view of an embodiment of the floor mat element 150. In use, an animal shed floor in general can become slippery due to the urine and feces, and thus prone to accidents. Since the first mat surface 131 is the walking surface for animals 109, it is advantageous to add a texture to the first mat surface 131, i.e. to 'unsmooth' this walking surface. Therefore, the first surface 131 comprises notches 137 that form an intersecting pattern on the floor mat element 150, and on the floor mat 130 when in use. The notches 137 have a depth with respect to the first mat surface 131, either flat or with raised and lower portions as shown in Fig. 3B. The notches may be sloped itself, i.e. the depth of the notches varies over a longitudinal direction, such that the base of the notches has a slope from a relatively small off set from the first mat surface 131, i.e. a notch represents a longitudinal indentation with a depth different from zero, for instance at the raised portion 135, to a depth flush with the first mat surface 131, for instance at the lower portion 136.. The notches 137 provide an improved flow of urine and air into the reservoir 102. The floor mat element 150 as shown in Fig. 4A is shaped as a parallelogram with no right angles, i.e. the angle α (alpha) deviates from 90 degrees, for instance less than 10 degrees, preferably between 1 to 5 degrees.

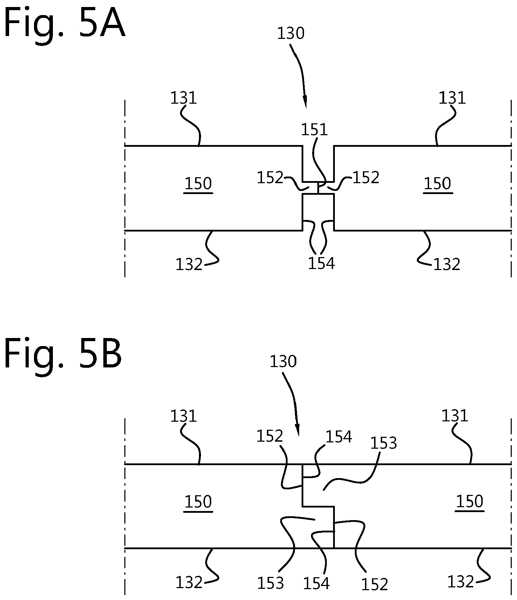

Figure 4B shows a top view of the floor mat element 150 as shown in cross section in Fig. 3B. Here it is shown that when the sloping sidewalls 134 of neighboring indentations 133 are adjacent, a faceted first mat surface 131 is obtained. Note that the notches 137 as shown in Fig. 4A can be applied to such a faceted first mat surface 131 as well, such that the pattern of intersecting notches 137 run over the sloping side walls as well. The floor mat element 150 further has a peripheral side edge 154 and a peripheral protrusion 152 extending from the side edge 154, see further Figure 5.

Fig. 5 shows several embodiments of engaging two floor elements according to the inventions. When a floor mat 130 comprises two or more floor mat elements 150, the floor elements 150 need to be engaged with each other to form a floor mat 130 for an animal shed. The floor mat elements may be adjacent in a simple configuration, where the side edges of two neighboring floor elements are adjacent to each other to form a straight interface extending in a straight and perpendicular fashion from the first mat surface 131 to the second mat surface 132, not shown. Figure 5A shows a configuration of two floor mat elements 150 having a side edge 154, from which a protrusion 152 extends. The distance between the first mat surface 131 and the protrusion 152 and between the second mat surface 132 and the protrusion 152 is equal, such that the protrusions 152 of two adjacent floor mat elements 150 will abut upon assembly of the floor mat 130, and form an interface 151 between the floor mat elements 150. The edges 154 of the floor mat elements 150 remain spaced apart.

Figure 5B shows a configuration of two floor mat elements 150 where a first side edge 154 has a protrusion 153 extending from the first side edge at the first mat surface 131, and wherein the second side edge 154 has a notch 152 extending into the second side edge and the first mat surface 131. The protrusion 153 and the notch 152 have accommodating shapes, such that when the protrusion 153 and the notch 152 engage, the first mat surfaces 131 of the two floor mat elements 150 are flush. In this figure, the notch and protrusion both extend over half of the edge or side edge 154 of each floor mat element 150. It is also possible that the notch and protrusion extend over less of the side edge, thus forming smaller engagement means for the floor mat elements (not shown). Alternatively, or additionally, the notch and protrusion may not be fully engaged and only overlapping, such that the respective side edges of the floor mat elements are spaced apart (not shown).

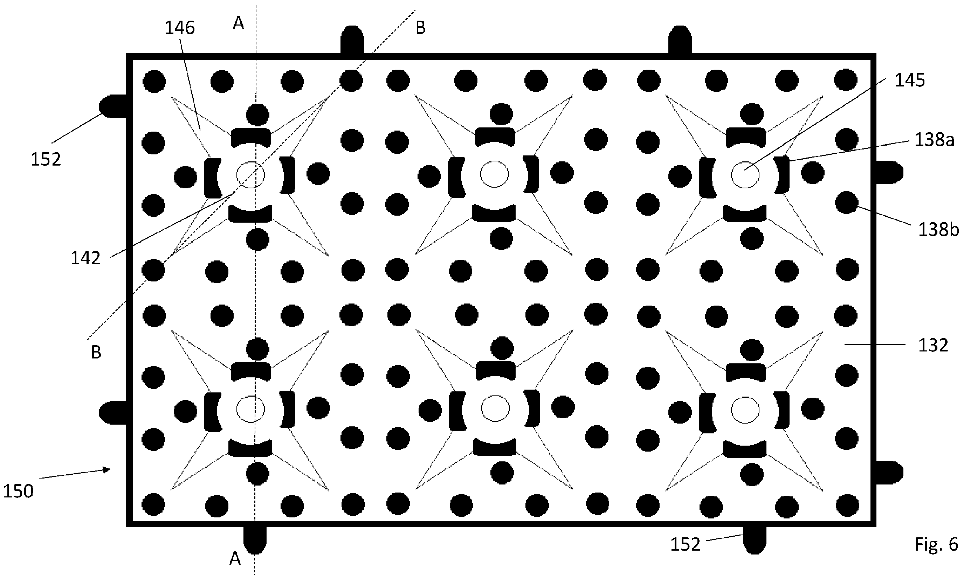

Figure 6 shows a schematic bottom view of floor mat element 150 according to the invention. The bottom view shows the second mat surface 132 that in use is facing the first floor surface 121, see Fig. 2. The second mat surface 132 is provided with studs 138, as also shown in Fig. 2. In this embodiment, the studs 138 comprise first studs 138a and second studs 138b. The first studs 138a are neighbouring the second partition 142, and the second studs 138b are distributed on the second mat surface 132.

The second partition 142 is shown to have four extensions 146 evenly and symmetrically distributed around a periphery to form a starlike shape at the second floor mat 132. The first studs 138a are located between the extensions 146, at the periphery of the second partition 142.

Additionally, the floor mat element 150 is shown to have protrusions 152 that may engage with a neighbouring adjacent floor mat element 150 to stabilize the floor mat elements 150 with respect to each other and form a floor mat 130.

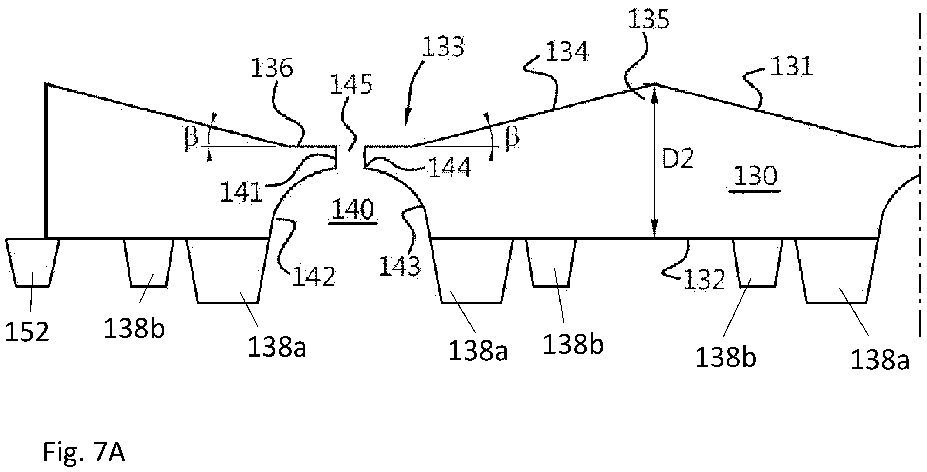

Figure 7A shows a schematic cross-section of the floor mat element 150 of Fig. 6 along line A-A. The first studs 138a are shown to have a larger height than the second studs 138b and are located at the lower portion 136 of the indentation 133. The second studs 138b are located at or closer to the raised portion 135 of the indentation 133. In use, when the cow 109 walks on the floor mat element 150, it may feel as if there are no indentations 133 due to the difference in height of the first and second studs 138a, 138b.

The floor mat element 150 is further provided with protrusions 152. The protrusions 152 are shaped as the second studs 138b, and partly extends beyond an edge of the floor mat element 150. The part of the protrusions 152 extending beyond the floor mat element 150 is then to engage in use with the second mat surface 132 of an adjacent floor mat element 150.

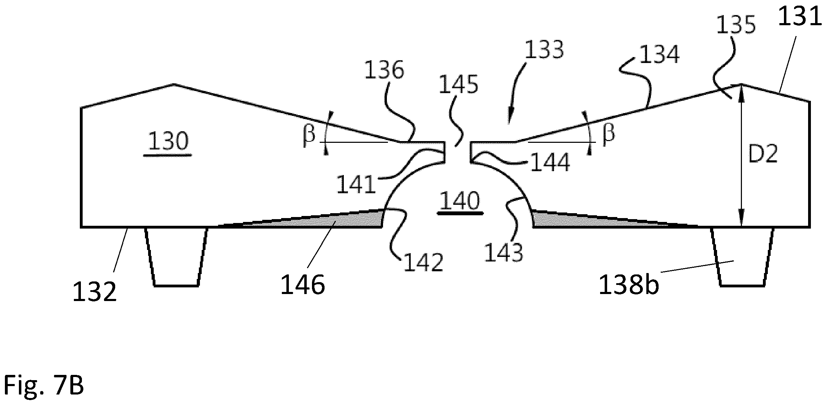

Figure 7B shows a schematic cross-section of the floor mat element 150 of Fig. 6 along line B-B. The extensions 146 are shown to radiate from the second partition 142. The extensions 146 extend the interior surface 143 of the through hole 140, thereby enhancing the flow of fluids through the through hole 140.

The embodiments as shown in the figures can be combined with each other, but also with any additional features from the description.

**LIST OF ITEMS**

| | |
|---|---|
| 100. Animal shed system | 140. Through hole |
| 101. Animal shed | 141. First partition |
| 102. Manure reservoir or cellar | 142. Second partition |
| 103. Air extraction device | 143. Inner surface |
| 103'. Blower | 144. Step |
| 104. Air washer/scrubber | 145. Through hole opening |
| 105. Pump | 146. Extension |
| 106. Packed bed | |
| 107. Sprayer | |
| 108. Outlet | |
| 109. Animal | |
| | |
| 110. Floor | 150. Floor mat element |
| 111. Assembly | 151. Interface |
| | 152. Floor mat element protrusion |
| 120. Slatted floor | 153. Floor mat element notch |
| 121. First floor surface | 154. Floor element side edge |
| 122. Second floor surface | |
| 123. Slotted opening | |
| | |
| 130. Floor mat | 200. Manure suction robot |
| 131. First mat surface | 201. Feces |
| 132. Second mat surface | 202. Urine |
| 133. Indentation | 203. Manure |
| 134. Sidewall of indentation | |
| 135. Raised portion | |
| 136. Lower portion | |
| 137. Notch | |
| 138. Stud | |
| 138a. First stud | |
| 138b. Second stud | |

## Claims

1. Animal shed floor comprising an assembly of:
- a slatted floor having a first floor surface and an opposite second floor surface, wherein the second floor surface faces an underlying manure reservoir, and having a plurality of slotted openings that open into the underlying manure reservoir; and
- a floor mat having a first mat surface and an opposite second mat surface spaced apart, wherein the first mat surface is a walking surface for animals and the second mat surface faces the first floor surface,
wherein the floor mat further comprises multiple through holes extending from the first to the second mat surface, and opening towards the slatted floor, wherein the through holes are relatively narrow compared to the slotted openings of the slatted floor, such that urine is allowed to flow through the through hole towards the slatted floor and feces remains on the first mat surface when the animal shed floor is in use.

2. Animal shed floor according to claim 1, wherein the through opening has a first cross section in a plane parallel to the first and/or second mat surface, a second cross section perpendicular to the first and/or second mat surface, and an interior surface, wherein the first cross section is relatively small at the first mat surface and relatively wide at the second mat surface, such that the opening of the through hole at the second mat surface is wider than then the opening of the through hole at the first mat surface.

3. Animal shed floor according to claim 2, wherein the interior surface has a step at a distance different from zero from the first and second mat surface, thus dividing the through hole into a first partition extending from the first mat surface to the step, and a second partition extending from the step to the second mat surface, wherein the first cross section of the first partition at the first mat surface is relatively narrow compared to the first cross section of the second partition at the second mat surface,

4. Animal shed floor according to claim any of the preceding claims, wherein the walking surface of the floor mat comprises a texture, wherein any dimension of the texture is relatively small compared to the first and/or second cross section of the first partition.

5. Animal shed floor according to any of the preceding claims, wherein the floor mat comprises a plurality of indentations at the walking surface, wherein each of the through holes is located in an indentation, wherein each indentation comprises a sloping sidewall that surrounds the through hole, wherein the sloping sidewall of each indentation forms a sloping portion of the first mat surface that connects a lower portion of the first mat surface formed by the indentation, and a raised portion of the first mat surface, and wherein the sloping sidewalls of neighboring indentations are adjacent, forming the raised portions of the first mat surface.

6. Animal shed floor according to any of the preceding claims, wherein the second partition is shaped as a frustum, in particular a right frustum, or as a dome, i.e. an upper section of a hollow sphere, or as a cylinder, in particular a right cylinder, extending from the step to the second mat surface.

7. Animal shed floor according to any of the preceding claims, wherein the floor mat is made of a resilient material, in particular an elastomer, such as a rubber or a thermoplastic elastomer.

8. Animal shed floor according to any of the preceding claims, wherein the second mat surface comprises a plurality of protrusions that are spaced apart, and distributed between the through holes, such that a distance different from zero is created between a mouth of any through hole and the first floor surface.

9. Animal shed floor according to claim 8, wherein each protrusion forms a stud, and the plurality of protrusions are studs spaced apart from each other and distributed between the through holes.

10. Floor mat for use in an animal shed floor according to any of the preceding claims, wherein the floor mat covers the slatted floor at least partially.

11. Floor mat according to claim 10, comprising at least two floor mat elements, wherein each floor mat element has side edges, and wherein at least a first side edge of a first floor mat element forms an interface with a second side edge from a second floor mat element.

12. Floor mat according to claim 10 or 11, wherein each floor mat element is shaped as a trapezoid, in particular as a parallelogram.

13. Animal shed comprising an animal shed floor according to any of claims 1-9 or a floor mat according to any of claims 10-12.

14. Animal shed system comprising
- an animal shed having an animal shed floor according to any of claims 1-9;
- a reservoir situated underneath the animal shed floor, wherein the through holes and the slotted openings allow a fluid flow from the animal shed to the reservoir; and
- an air extraction device for extracting ammonia containing air underneath the floor, out of the reservoir, wherein the air extraction device creates a lower pressure under the floor relative to the pressure above the floor.

15. System according to claim 14, comprising an air washer coupled to the air extraction device to capture the ammonia present in the extracted air and/or a manure-removal vehicle for removing manure or feces from the animal-shed floor.
